Europäisches Patentamt

European Patent Office

Office européen des brevets

(11) Publication number: **0 416 468 A1**

## EUROPEAN PATENT APPLICATION

(21) Application number: 90116684.3

(22) Date of filing: 30.08.90

(51) Int. Cl.5: **H02K 9/06**, H02K 9/04, H02K 5/20

(30) Priority: 04.09.89 JP 227330/89
29.09.89 JP 254885/89

(43) Date of publication of application:
**13.03.91 Bulletin 91/11**

(84) Designated Contracting States:
**CH DE FR GB LI SE**

(71) Applicant: **Kabushiki Kaisha Toshiba**
**72, Horikawa-cho Saiwai-ku**
**Kawasaki-shi(JP)**

(72) Inventor: **Yagi, Nobuyuki, c/o Intellectucal**
**Property Div.**
**Kabushiki Kaisha Toshiba, 1-1, Shibaura**
**1-chome**

Minato-ku, Tokyo 105(JP)
Inventor: **Nagayama, Takashi c/o Intellectucal**
**Property Div.**
**Kabushiki Kaisha Toshiba, 1-1, Shibaura**
**1-chome**
Minato-ku, Tokyo 105(JP)
Inventor: **Kobayashi, Yoshitaka c/o**
**Intellectucal Prop. Div.**
**Kabushiki Kaisha Toshiba, 1-1, Shibaura**
**1-chome**
Minato-ku, Tokyo 105(JP)

(74) Representative: **Henkel, Feiler, Hänzel &**
**Partner**
**Möhlstrasse 37**
**W-8000 München 80(DE)**

(54) Air-cooled motor for use in vehicles.

(57) An air-cooled motor comprising a stator (1) and a rotor (11) located in the stator (1). The stator (1) has a frame (2, 2a, 2b), a stator core (3) rotatably located in the frame (2, 2a, 2b), and a stator coil (4) fastened to the stator core (3). The rotor (11) has a shaft (12), a rotor core (13), and rotor bars (14). The rotor core (13) is located, defining a gap (17) between it and the inner circumferential surface of the stator core (3), and has a plurality of air-guiding holes (18) extending parallel to the axis of the rotor (11). An air blower (23) is provided outside the stator (1), for forcing cooling air into the frame (2) through an air-inlet port (20) of the frame (2). A greater part of the cooling air, or main air, flows from one end of the stator core (3) to the other end thereof, through the gap (17) and the holes (18). A bypass (30) extends outside the stator core (3). The remaining part of the cooling air, about 15 to 40% thereof, flows through the bypass (30) into the frame (2) and is applied directly to the other end of the stator core (3).

F I G. 1

## AIR-COOLED MOTOR FOR USE IN VEHICLES

The present invention relates to a motor suitable for use as main motor of a railway vehicle such as an electric train car, and more particularly to an air-cooled motor into which air is introduced from the outside to cool the internal components of the motor.

Air-cooled motors for use in vehicles are known, as is disclosed in Induction Motors for Use in Vehicles , Science of Electric Vehicles, February 1988, pp. 18-23, in Published Unexamined Japanese Patent Application No. 61-94545, and also in Published Unexamined Japanese Utility Model Application No. 62-11371. As may be understood from these publications, more and more squirrel-cage motors, which are induction motors controlled by VVVF inverters, are recently used as main motors of railway vehicles such as electric train cars. Since a squirrel-cage motors has no brushes, it is maintenance-free, can rotate at higher speed, can be smaller and lighter, and can generate greater power, than the conventional DC motors.

A squirrel-cage motor comprises a stator and a rotor. The stator has a frame, a stator core, and a stator coil. The frame has two end plates. The stator core is fixed to the inner circumferential surface of the frame. The stator coil is attached to an inner circumferential portion of the stator core. Two bearings are held in the two holes made in the end plates of the frame, respectively. The rotor is a squirrel-cage rotor, comprising a rotor shaft, a rotor core, and a plurality of rotor bars, and two end rings. The rotor shaft is rotatably supported by the bearings of the stator. The rotor core is fixed on the rotor shaft. The rotor bars are arranged on the outer circumferential surface of the rotor core, each having ends fastened to the end rings.

When a current is supplied to the stator coil, this coil generates a moving magnetic field. As the magnetic field extends across the rotor bars, an electromotive force is induced, that is, an electric current is generated. This current and the magnetic field act upon each other, whereby the rotor rotates.

While the squirrel-cage motor is operating, both the stator and the rotor generate a great amount of heat. Because of this heat, the stator coil and the rotor bars are heated. When the temperatures of the coil and the bars rise above a predetermined value, the insulator of the stator coil becomes less insulative than desired, whilst the rotor bars become less strong than required. Consequently, the lifetime of the motor is shorted very much. To prevent the excessive heating of the stator coil and the rotor bars, cooling air is introduced into the motor from the atmosphere, thus cooling the internal components of the motor.

The frame of the stator, which extends along the axis of the stator, has an air-inlet port at one end, and an air-outlet port at the other end. Further, a plurality of air-guiding holes is made in the rotor core and arranged in a line parallel to the axis of the rotor, from the first end to the second of the rotor core. An air blower is located outside the motor, for forcing low-temperature cooling air into the frame from the atmosphere through the air-inlet port. Alternatively, an impeller may be located within the frame at the second end thereof and be attached to the rotor shaft. As the rotor shaft rotates, the impeller is rotated, causing the low-temperature cooling air to flow into the frame from the atmosphere through the air-inlet port.

In the frame, the cooling air flows from the first end of the stator to the second end thereof, passing through the gap between the stator core and the rotor core and also through the air-guiding holes of the rotor core. The cooling air finally flows out of the frame through the air-outlet port. As the cooling air flows within the frame in this way, it cools the stator coil and the rotor bars -- all located in the frame.

Since the cooling air absorbs heat as it flows in the frame, from the first to the second end thereof, its temperature is low at the first end of the frame, and high at the second end of the frame. Obviously, the cooling effect of the air gradually decreases as the air flows from the first end of the frame to the second end thereof. Consequently, a temperature gradient exists in the frame. This temperature gradient is great. In other words, the temperatures at the first and second ends of the frame differ very much from each other, and the temperature is highest at the second end of the frame.

Hence, outer dimensions and output power of the motor must be set such that the insulator of the stator coil remains sufficiently insulative even at the highest possible temperature at the second end of the frame. In this regard, the smaller the motor, or the greater the output of the motor, the higher the temperature at the second end of the frame. A squirrel-cage motor of the type described above can hardly be made smaller, lighter or more powerful.

Recently it is demanded that electric train cars be as efficient as possible. Hence, squirrel-cage motors for use as main motors of the train cars should be smaller, lighter and more powerful. In view of this, the conventional air-cooled squirrel-cage motors cannot be used as main motors of electric train cars, because of the great temperature gradient existing in these motors.

The conventional squirrel-cage motor can generate greater power if the cooling air is introduced into the motor at a higher rate. To introduce the cooling air at a higher rate, a larger impeller must be incorporated into the motor, in which case the motor will inevitably become larger and proportionally heavier.

It is accordingly the object of this invention to provide an air-cooled motor for use in vehicles, which has a small internal temperature gradient without applying cooling air at high rate, so that the insulator of the stator coil remains sufficiently insulative and the other components remains adequately strong, and which can be small, light, and can yet output great power.

According to the present invention, there is provided an air-cooled motor for use in a vehicle, comprising:
a stator having a frame and a stator core located within the frame, extending along an axis of the stator, and having a first end and a second end;
a rotor rotatably supported in the stator and having a rotor core located in the stator core, with a gap provided between the stator core and the rotor core, and having a plurality of air-guiding holes extending parallel to the axis of the rotor;
main-air supplying means for supplying cooling air consisting of main air and bypass air, into the frame of the stator, such that the cooling air flows within the frame from the first to the second end of the stator core through the gap and the air-guiding holes; and
bypass-air supplying means for supplying the bypass air into the second end of said stator core, said bypass air being 15 to 40% of the cooling air supplied by the main air-supplying means into the frame of the stator.

The main air and the bypass air, which form cooling air, the latter being 15 to 40% of the cooling air, cooperate to cool the internal components of the motor, such as the stator coil and the rotor bars, to the same extent. Thus, the temperature gradient in the motor is small enough. The internal components of the motor are not heated excessively, without increasing the rate at which the cooling air is introduced at higher rate into the motor. Neither does the insulator of the stator coil become less insulative than desired, nor does the stator coil or the rotor bars become less strong than required. Therefore, the air-cooled motor according to the invention can be small and light, and can yet output sufficiently great power.

Fig. 1 is a sectional view showing the upper half of a motor according to a first embodiment of this invention, taken along the vertical line intersecting with the axis of the motor;

Fig. 2 is a sectional view of the motor, taken along line II-II shown in Fig. 1;

Fig. 3 consists of a sectional view showing part of the motor, and a graph representing the temperature distribution of the stator coil and rotor bars of the motor;

Fig. 4 consists of a sectional view illustrating part of the motor, and a graph showing the relationship between the ratio of the bypass air to the cooling air and the temperatures of the stator coil and rotor bars of the motor;

Fig. 5 is a sectional view showing the upper half of a motor according to a second embodiment of this invention, taken along the vertical line intersecting with the axis of the motor;

Fig. 6 is a sectional view of the upper part of a motor according to a third embodiment of the present invention, taken along a line intersecting with the axis of the motor;

Fig. 7 is a sectional view illustrating the upper half of a motor according to a fourth embodiment of this invention, taken along the vertical line intersecting the axis of the motor;

Fig. 8 is a front view showing a motor according to a fifth embodiment of the present invention;

Fig. 9 is a sectional view taken along line X-X shown in Fig. 8;

Fig. 10 is a sectional view showing a motor according to a sixth embodiment of this invention, taken along a vertical intersecting with the axis of the motor;

Fig. 11 is a sectional view, taken along line Y-Y shown in Fig. 10;

Fig. 12 is a sectional view showing a motor according to a seventh embodiment of this invention, taken along a vertical line intersecting with the axis of the motor; and

Fig. 13 is a sectional view, taken along line Z-Z shown in Fig. 12.

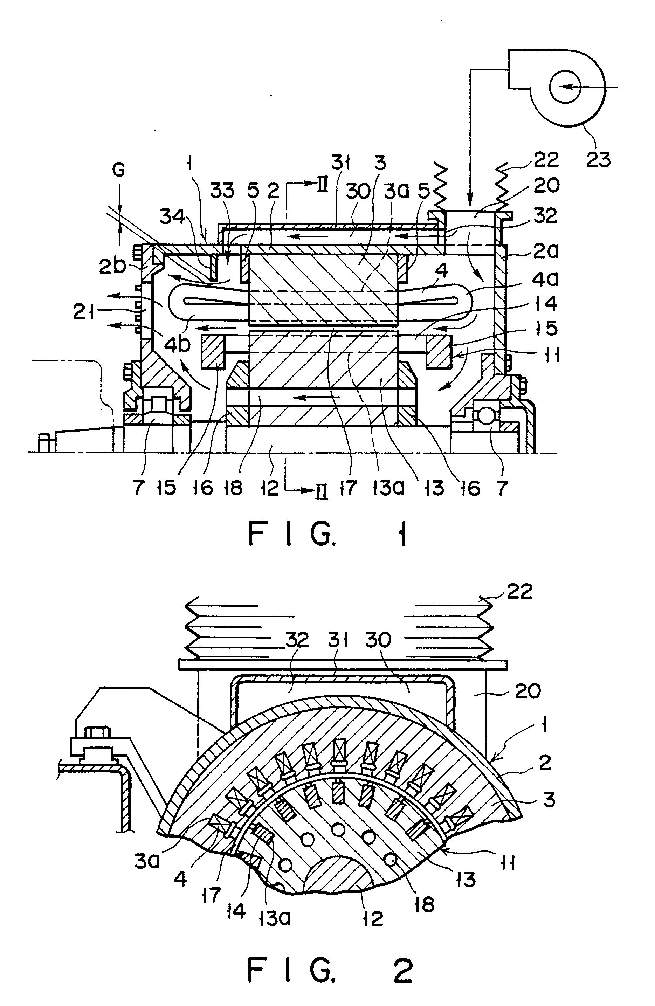

A first embodiment, which is an air-cooled motor for use in a vehicle, will now be described with reference to Figs. 1 to 4.

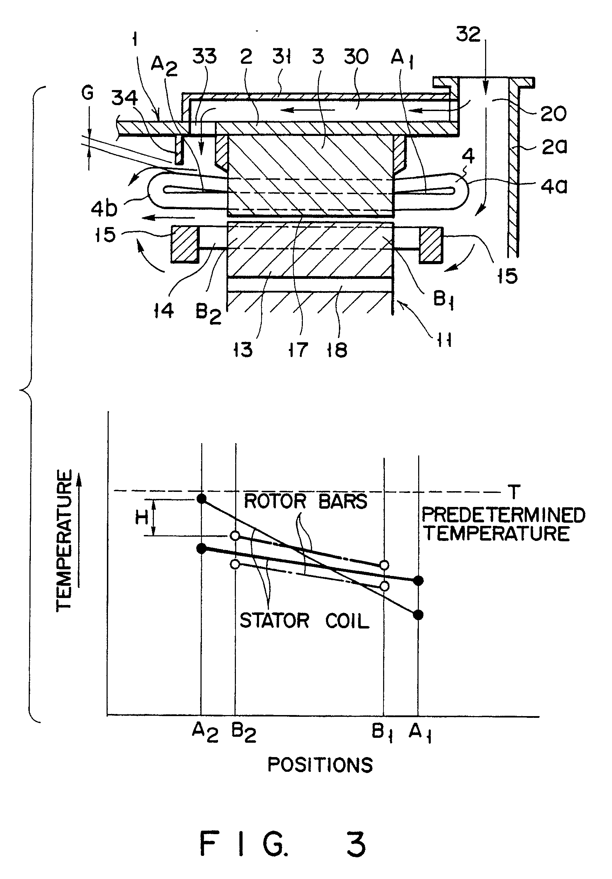

As is illustrated in Figs. 1 and 2, this motor comprises a stator 1 and a squirrel-cage rotor 11.

The stator 1 comprises a hollow cylindrical frame 2, a stator core 3, and a stator coil 4. The first and second ends of the frame 2, which is the housing of he motor, are closed by two end plates 2a and 2b, respectively. The stator core 3, made of a number of thin iron sheets laminated together, is fastened to the inner circumferential surface of the frame 2 by means of fastening members 5. The stator core 3 has a number of slots 3a cut in the inner circumferential surface and expending parallel to the axis of the frame 2. The stator coil 4 is composed of a number of coil units fitted in the slots 3a of the stator core 3 respectively. The ends portions 4a and 4b of each coil unit protrude from the ends of the stator core 3, respectively. The end plates 2a and 2b have a center opening each, in which a bearing 7 is fitted.

The squirrel-cage rotor 11 comprises a rotor shaft 12, a rotor core 13, a plurality of rotor bars 14, and two end rings 15. The rotor shaft 12 is rotatably supported by the bearings 7. The rotor core 13 is made of a number of thin iron sheets laminated together and fastened to the rotor shaft 12 by means of fastening members 16. A number of slots 13a are made in the outer circumferential surface of the rotor core 13. The rotor bars 14 are fitted in these slots 13a, respectively, each having ends protruding from the ends of the rotor core 13. The rotor bars 14 are connected at one end to the first end ring IS and at the other end to the second end ring 15. The rotor core 13 is located, such that a gap 17 is provided between the stator core 3 and the rotor core 13. A plurality of air-guiding holes 18 are made in the rotor core 13, all extending along the axis of the core 13 and spaced apart at regular intervals in the circumferential direction of the core 13.

An air-inlet port 20 is made in that portion of the hollow cylindrical frame 2 which is close to the first end. A plurality of air-outlet ports 21 are made in the second end plate 2b, spaced apart at regular intervals in the circumferential direction of the end plate 2b. A flexible duct 22 is connected at one end to the air-inlet port 20, and at the other end to the air-outlet port of an air blower 23 located outside the frame 2 and mounted on, for example, the chassis of a vehicle.

When the air blower 23 is operated, cooling air of a low temperature, such as the atmospheric air, is supplied from the blower 23 to the air-inlet port 20 through the flexible duct 22. A greater part of the cooling air, hereinafter referred to as "main air", is forced into the frame 2 through the air-inlet port 20. Once formed into the frame 2, the main air flows from the first end of the stator core 3 to the second end thereof through the air-guiding holes 18 and also through the gap 17 between the cores 3 and 13. Finally, the main air is discharged from the frame 2 through the air-outlet ports 21.

A channel bar 31 defining a bypass 30 is fastened to the outer circumferential surface of the hollow cylindrical frame 2. The bypass 30 communicates with an inlet opening 32 formed in the cylindrical portion of the frame 2, defining the inlet port, and with an outlet opening 33 also formed in the frame 2. The main part of the cooling air introduced in the air inlet port 20 is directly guided to the one side of the stator core 3 are and the remaining part of the ccoling air is guided in the bypass 30 through the inlet opening 32 and flows to the other side of the stator core 3 through the outlet opening 33. The remaining part of the cooling air, hereinafter referred to as "bypass air".

The bypass air ranges from 15% to 40% of the cooling air supplied from the air blower 23 to the air-inlet port 20. In order to limit the amount of the bypass air to a value falling within this specific range, an arcuate air-guiding plate 34 protrudes from the inner circumferential upper surface of the hollow cylindrical frame 2, located between the other opening 33 of the bypass 30 and the second end 2b of the hollow cylindrical frame 2. The plate 34 has such a width that a narrow gap G is provided between it and the second end 4b of each unit of the stator coil 4.

The cross-sectional area of the bypass 30 is slightly less than the sum of the cross-sectional area of the gap 17 and the total cross-sectional area of the air-guiding holes 18.

The operation of the air-cooled motor shown in Figs. 1 and 2 will now be explained.

When the switch of the motor is turned on, the air blower 23 is automatically started. As a result, the cooling air, such as the atmospheric air, is supplied to the motor through the flexible duct 22. The main air, i.e., the greater part of the cooling air, is forced into the frame 2 of the stator 1 through the air-inlet port 20, then flows from the first end of the stator core 3 to the second end thereof through the gap 17 and the air-guiding holes 18, and is finally discharged from the second end of the stator core 3 through the air-outlet ports 21.

In the meantime, the bypass air, i.e., the remaining 15% to 40% of the cooling air, is supplied from the inlet opening 32 of the bypass 30 to the outlet opening 33 thereof. The bypass air is farther supplied into the hollow cylindrical frame 2, guided by the air-guiding plate 34 along the second end of each stator-coil unit to the end plate 2b, and passes through the gap G, thus reaching the second end 2b of the frame 2. The bypass air is discharged from the motor through the air-outlet ports 21, together with the main air which has passed through the gap 17 and the air-guiding holes 18.

The main air passing from the first to the second end of the stator core 3 through the gap 17 and also through the air-guiding holes 18, and the bypass air applied to the second end 4b of each stator coil unit, the internal components of the motor, such as stator coil 4 and the rotor bars 14 are cooled almost uniformly.

Fig. 3 is a graph representing the temperature distribution of the stator coil 4 and also that of the rotor bars 14. More precisely, the thick solid line shows the temperature distribution of the coil 4, and the thick broken line indicates the temperature distribution of the bars 14. Also in Fig. 3, the thin solid line represents the temperature distribution of the stator coil of a conventional motor, and the thin broken line shows that of the rotor bars of the conventional motor. As is evident from the thick and thin solid lines, the temperature difference between the ends A1 and A2 of each stator coil unit is far less than that in the conventional motor. further, as can be understood from the thick and thin broken lines, the temperature difference between the ends B1 and B2 of each rotor bar 14 is as small as that observed in the conventional motor, though the temperatures of both ends B1 and B2 are higher than those of each rotor bar incorporated in the conventional motor. It should be noted that the temperature of the end B2 of each rotor bar 14, which is higher than those of any other portions of the internal components, is lower by H than the temperature of the end A2 of the each stator coil unit of the conventional motor, which is higher than those of any other portions of the components incorporated in the conventional motor.

As a result, the temperature gradient within the hollow cylindrical frame 2 is small as a whole, and the internal components of the motor are maintained at temperature far below a predetermined value T, even if the cooling air is formed into the frame 2 at a higher flow rate. Thus, the insulator of the stator coil 4 remains sufficiently insulative, and the rotor bars 14 remain adequately strong. The motor shown in Figs. 1 and 2 can therefore be small and light, and can yet output sufficient power.

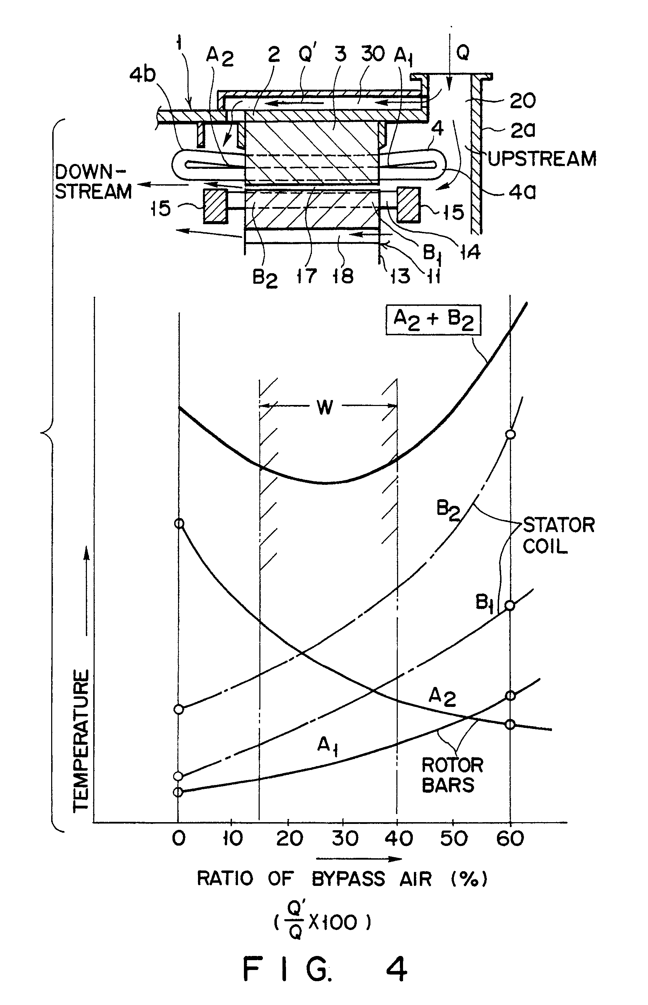

Fig. 4 represents the relationship between the ratio of the bypass air to the cooling air and the temperatures of the stator coil and rotor bars of the motor shown in Figs. 1 and 2. This graph is drawn based on the results of the experiment, in which the bypass air was supplied into the frame 2 through the bypass 30 at various flow rates $Q'$, while maintaining the flow rate Q of the cooling air, and the temperatures of the end portions A1 and A2 of rotor bars 14 and those of the end portions B1 and B2 of the stator coil units were measured. In Fig. 4, the curve A1 indicates how the temperature of the end portion A1 of each rotor bar 14 changes with the ratio of the bypass air to the cooling air, $Q'/Q \times 100$; the curve A2 shows how the temperature of the end portion A2 of each rotor bar 14 changes with the ratio of the bypass air to the cooling air; the curve B1 represents how the temperature of the end portion B1 of each stator coil unit changes with the ratio of the bypass air to the cooling air; and the curve B2 shows how the temperature of the end portion A1 of each stator coil unit changes with the ratio of the bypass air to the cooling air.

The thick solid-line curve indicates how the sum of the temperatures of the end portion A2 of each rotor bar 14 and that of the end portion B2 of each stator coil unit changed as the ratio of $Q'/Q$ was increased. As the thick solid-line curve, A2 + B2, clearly reveals, the sum of the temperatures A2 and B2 was minimal when the ratio $Q'/Q$ was 25% to 30%. The motor, tested the experiment, was considered to operate with a high efficiency when this ratio fell within a range from 15% to 40%. The end portion B2 of the stator coil unit was heated more than any other portion and more than any other component, but to a temperature 5 to 10% lower than the end portion of each stator coil unit incorporated in the conventional motor which has no bypasses.

Hence, the stator coil 4 and the rotor bars 14 have sufficiently small temperature gradients, and the internal components, including he coil 4 and the bars 14, are maintained at temperature far lower than the predetermined value, provided that the bypass air is supplied at the ratio of 15 to 40% to the cooling air. Since the temperatures of the components remain below the value T, the density of the current flowing the components increases, whereby the components can be made thinner to render the motor, as a whole smaller and lighter. Alternatively, by virtue of the increase of the current density, the motor can output greater power.

The first embodiment shown in Figs. 1 and 2 requires the assistance of the air blower 23 for forcing the cooling air into the frame 2, mostly through the air-inlet port 20 and partly through the port 20 and the bypass 30. Alternatively, the air blower 23 may be replaced by an impeller located within the frame 2, which is designed to draw air into the frame 2 from the atmosphere.

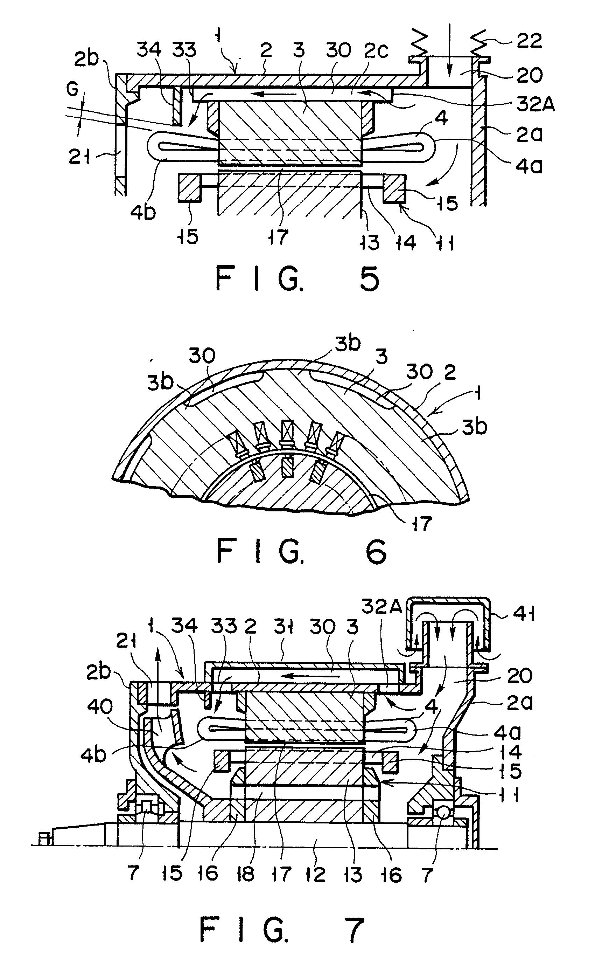

Fig. 5 illustrates a motor according to a second embodiment of the invention. This motor is identical to the first embodiment, except that no bypasses are formed on the outer circumference of the frame 2, and a number of bypasses 30 are provided within the frame 2, instead. More specifically, as is shown in Fig. 5, a number of ribs 2c protrude from the inner circumferential surface of the frame 2, extending parallel to the axis of the stator 1 and spaced apart at regular intervals along the circumference of the frame 2. These ribs 2c, the inner circumference of the frame 2 and the outer circumference of the stator core 3 define a number of bypasses 30. Inlet openings 32A of the bypass 30 are provided at the one inner side of the frame 2. Part of the cooling air introduced into the frame 2 through the air-inlet port 20 and the inlet openings 32A flows into each bypasses 30 and, hence, functions as bypass air. The amount of this bypass air is 15 to 40% of the cooling air, as in the first embodiment. The internal components, in particular stator coil 4 and the rotor bars 14, are uniformly cooled, thus having as small a temperature gradient as those of the first embodiment. In addition, the outer circumference of the stator core 3 is cooled more efficiently than in the first embodiment.

Fig. 6 shows a motor according to a third embodiment of the present invention. The motor is identical to the first embodiment, except that no bypasses are formed on the outer circumference of the frame 2, and the stator core 3 has a number of bypasses 30. More specifically, as is illustrated in Fig. 6, a number of low ribs 3b are formed on the outer circumference of the stator core 3, extending parallel to the axis of the core 3 and spaced apart at regular intervals along the circumference thereof. These ribs 3b, the inner circumference of the frame 2, and the outer circumference of the core 3 define the bypasses 30. Part of the cooling air introduced into the frame 2 through the air-inlet port 20 flows into each bypasses 30 and, hence, functions as bypass air. The amount of this bypass air is 15 to 40% of the cooling air. The internal components, particularly the stator coil 4 and the rotor bars 14, are uniformly cooled, having as small a temperature gradient as those of the first embodiment. In addition, the outer circumference of the stator core 3 is cooled more efficiently than in the first embodiment.

Fig. 7 shows an air-cooled motor according to a fourth embodiment of the invention, which has an impeller designed to draw air into the stator frame 2. More precisely, this motor is different from the first embodiment in three respects. First, an impeller 40 is located at the second end of the status core 3 and connected to the rotor shaft 12. Secondly, the hollow cylindrical frame 2 has two holes 32A and 33 which connects the ends of the bypass 30 to the interior of the frame 2. Thirdly, the second end plate 2b has no holes; rather, the frame 2 has an air-outlet hole 21 made in its second end portion.

When the switch of the motor is turned on, the squirrel-cage rotor 11 starts rotating. As a result, the impeller 40, which is connected to the rotor shaft 12, also starts rotating. As it rotates, the impeller 40 draws cooling air of low temperature, such as the atmospheric air, into the first end of the stator frame 2 through a air filter 41 and the air-inlet port 20. The greater part of the cooling air, i.e., the main air, flows from the first end of the stator core 3 to the second end thereof, through the gap 17 and the air-guiding holes 18, whilst the remaining part of the cooling air, i.e., the bypass air, flows into the bypass 30 through the hole 32A, then passes through the bypass 30, an finally flows into the frame 2 via the hole 33. The bypass air is guided by the air-guiding plate 34 to the second end 4b of each stator coil unit, thus cooling the end 4b. The impeller 40 forces both the main air and the bypass air from the motor through the air-outlet port 21.

Also in the fourth embodiment shown in Fig. 7, the amount of this bypass air is 15 to 40% of the cooling air, and the internal components, particularly the stator coil 4 and the rotor bars 14, are cooled uniformly, thus having a sufficiently small temperature gradient.

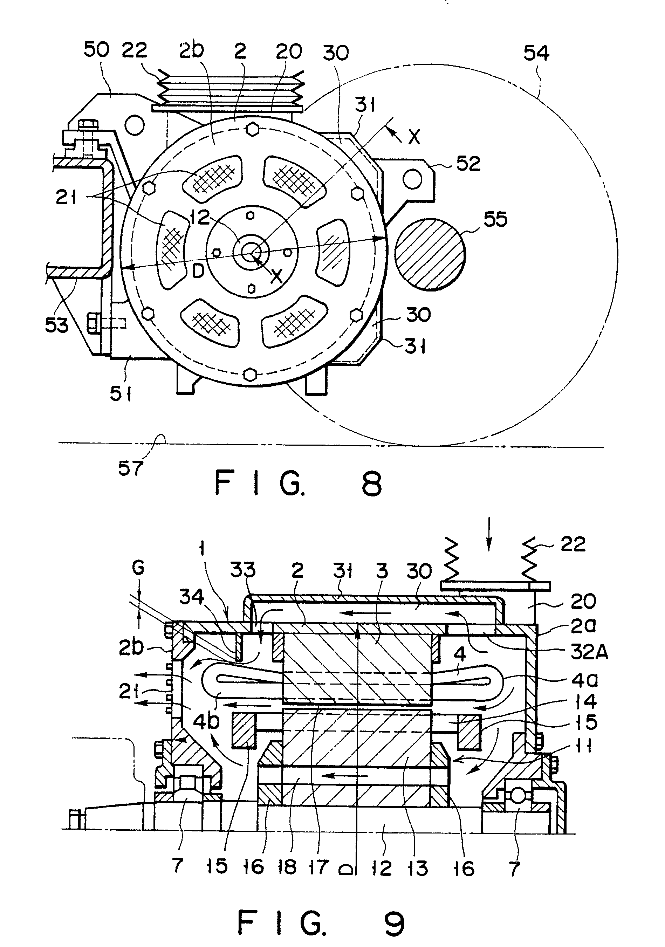

Figs. 8 and 9 illustrates an air-cooled motor according to a fifth embodiment of the present inventions As Fig. 8 shows, this motor is suspended from the chassis of a vehicle. How the motor is attached to the chassis will be described in detail.

Three noses 50, 51, and 52 protrude from the outer circumference of the stator frame 2, more precisely from the front-upper, the front-lower, and the rear-upper portions of the frame 2, respectively. The noses 50 and 51 are fastened to the frame 53 of the chassis, whereas the nose 52 is fastened to the gear box (not shown) provided for the axle 55 to which wheels 54 are connected.

The chassis has but a much limited space for accommodating the motor. In particular, the spaces available at the front and rear of the frame 2, and above and below the frame 2, are limited due to the specific structure of the chassis and the design restrictions of the vehicle. On the other hand, the spaces available at the rear-upper and rear-lower portions of the frame 2 are relatively large. This is why two channel bars 31 are fastened to the rear-upper portion and rear-lower portions of the stator frame 2, respectively, defining two bypasses 30, together with the outer circumference of the frame 2. As may be understood from Fig. 9, either bypass 30 has an air-inlet opening 32A which opens to the upstream end of the stator core 3 located within the frame 2, and also an air-outlet opening 33 which opens to the downstream end of the stator core 3.

Despite the limited space available in the chassis for accommodating the motor, the bypasses 30 are formed on the outer circumferential surface of the stator frame 2. Each of the bypasses 30 supplies a proper amount of bypass air to the downstream end of the stator 1 and that of the squirrel-cage rotor 11, whereby the internal components of the motor are cooled uniformly, thus having a small temperature gradient. The stator frame 2 can have as large a diameter D as is permitted by the limited space available in the chassis for accommodating the motor. The motor can, therefore, outputs a sufficiently great power.

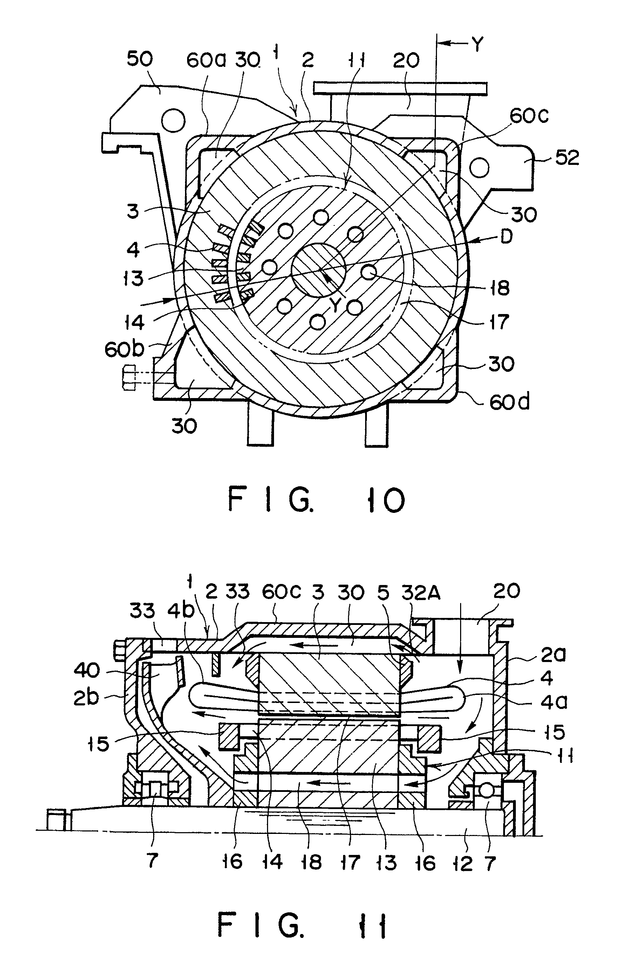

Figs. 10 and 11 illustrate an air-cooled motor according to a sixth embodiment of this invention. This motor is characterized in that the hollow cylindrical stator frame 2 has four bulging portions 60a, 60b, 60c, and 60d, extending parallel to the axis of the frame 2 and located in the front-upper, front-lower, rear-upper, and rear-lower portions of the space for accommodating the motors respectively. These bulging portions 60a to 60d define four bypasses 30 having a triangular cross section. The bulging portions 60a and 60c are parts of noses 50 and 52 which are to be fastened to the chassis of a vehicle. The bulging portion 60b also functions as a nose 51 which is to be fastened to the chassis. As is shown in Fig. 11, each of the bypasses 30 has an air-inlet opening 32A opening to the upstream end of the stator core 3, and also an air-outlet opening 33 opening to the downstream end of the stator core 3.

As in the fifth embodiment (Figs. 8 and 9), the bypasses 30 are formed on the inner circumferential surface of the stator frame 2, though the space available in the chassis for accommodating the motor is limited. Each bypass 30 supplies a proper amount of bypass air to the downstream end of the stator 1 and that of the squirrel-cage rotor 11, whereby the internal components of the motor are cooled uniformly, thus having a small temperature gradient. Moreover, since it is easy to form the bulging portions 60a to 60d, or the bypasses 30, the noses 50, 51, and 52 can be easily formed. Still further, the bulging portions 60a to 60d function as ribs, reinforcing the stator frame 2.

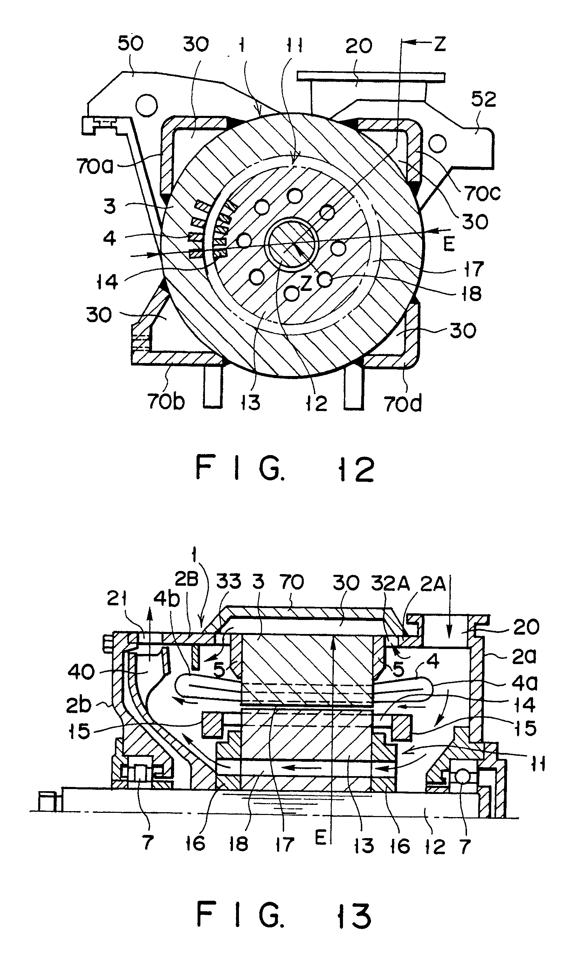

Figs. 12 and 13 shows an air-cooled motor according to a seventh embodiment of the invention. This is a so-called "frame-less motor." As is shown in Fig. 13, two hollow cylindrical frames 2A and 2B are fastened to two members 5 clamping the stator core 3, respectively. These frames 2A and 2B are connected to each other by four angle bars 70a, 70b, 70c, and 70d, thus forming a single stator core 3. As is shown in Fig. 12, these angle bars 70a to 70d are located at the front-upper, front-lower, rear-upper, and rear-lower portions of the space for accommodating the motor, respectively. These angle bars 70a to 70d define four bypasses 30 having a triangular cross section, together with the outer circumferential surface of the stator core 3. The angle bars 70a and 70c are parts of noses 50 and 52 which are to be fastened to the chassis of a vehicle. The angle bar 70b also functions as a nose 51 which is to be fastened to the chassis. As is shown in Fig. 13, each of the bypasses 30 has an air-inlet opening 32A opening to the upstream end of the stator core 3, and also an air-outlet opening 33 opening to the downstream end of the stator core 3.

The air-cooled motor shown in Figs. 12 and 13 achieves the same advantages as the sixth embodiment illustrated in Figs. 10 an 11. In addition, the stator core 3 is cooled more efficiently with the atmospheric air and the bypass air flowing through the bypasses 30, since its entire outer circumferential surface is exposed, except for those portions covered by the angle bars 70a to 70d.

Further, the stator frame 2 can have as large a diameter E as is permitted by the limited space available in the chassis for accommodating the motor. The motor can, therefore, outputs a sufficiently great power.

As can be understood from Figs. 11 and 13, the motors according to the six and seventh embodiments have an impeller 40 for drawing cooling air into the stator frame 2 or the stator frames 2A and 2B. Nevertheless, these motors can be modified into the type shown in Fig. 1 which has not impellers but an air blower 23 located outside the stator frame 2 or frames 2A and 2B.

## Claims

1. An air-cooled motor for use in a vehicle, comprising:
a stator (1) having at least one frame (2, 2a, 2b; 2A, 2B) and a stator core (3) located within said frame (2, 2a, 2b; 2A, 2B), extending along an axis of said stator (1), and having a first end and a second end;
a rotor (11) rotatably supported in said stator (1) and having a rotor core (13) located in said stator core (3), with a gap (17) provided between said stator core (3) and said rotor core (13), and having a plurality of air-guiding holes (18) extending parallel to the axis of said rotor (11); and
main-air supplying means (20, 21, 22, 23, 40, 41) for supplying cooling air consisting of main air and bypass air, into said frame (2, 2A) of said stator (1), such that the cooling air flows within said frame (2, 2A, 2B) from the first to the second end of said stator core (3) through said gap (17) and said air-guiding holes (18), said air-cooled motor characterized by further comprising:
bypass-air supplying means (30, 32, 32A, 33, 34) for supplying the bypass air into the second end of said stator core (3), said bypass air being 15 to 40% of the cooling air supplied by said main-air supplying means (20, 21, 22, 23, 40, 41) into said frame (2, 2b, 2B) of said stator (1).

2. The air-cooled motor according to claim 1, characterized in that said main-air supplying means includes an air blower (23) located outside said stator (1), for forcing cooling air into the frame (2, 2a) of said stator (1).

3. The air-cooled motor according to claim 1, characterized in that said main-air supplying means includes an impeller (40) located within said frame (2, 2a, 2B) and attached to said rotor (11), for forcing cooling air into the frame (2, 2a, 2b, 2A, 2B).

4. The air-cooled motor according to claim 1, characterized in that said bypass-air supplying means includes at least one bypass (30).

5. The air-cooled motor according to claim 1, characterized in that said bypass-air supplying means comprises at least one bypass (30) and an air-guiding plate (34) for limiting bypass air flowing through said bypass (30) to 15 to 40% of the cooling air.

6. The air-cooled motor according to claim 4, characterized in that said bypass (30) has such a cross sectional area as to pass 15 to 40% of the cooling air.

7. The air-cooled motor according to claim 4, characterized in that said bypass (30) is formed by a channel bar (31) attached to the outer surface of the frame (2) of said stator (1).

8. The air-cooled motor according to claim 4, characterized in that said bypass (30) is located between the frame (2) of said stator (1) and said stator core (3).

9. The air-cooled motor according to claim 4, characterized in that said bypass (30) is located among bulging portions (60a, 60b, 60c, 60d) formed integral with said frame (2).

10. The air-cooled motor according to claim 4, characterized in that said frame comprises two parts (2A, 2B), and said bypass (30) is formed of members (70a, 70b, 70c, 70d) connecting the parts (2A, 2B) of said frame.

11. The air-cooled motor according to claim 4, characterized in that said bypass (30) is located at a front-upper, front-lower, rear-upper of rear-lower portion of the frame (2, 2A, 2B) of said stator (1), where a relatively large space is available.

12. The air-cooled motor according to claim 9, characterized in that three (60a, 60b, 60c) of said bulging portions serve as nose (50, 51, 52) for supporting the motor.

13. The air-cooled motor according to claim 10, characterized in that three (70a, 70b, 70c) of said members serve as nose (50, 51, 52) for supporting the motor.

EP 0 416 468 A1

F I G. 1

F I G. 2

F I G. 3

FIG. 4

F I G. 5

F I G. 6

F I G. 7

F I G. 8

F I G. 9

EP 0 416 468 A1

F I G. 10

F I G. 11

F I G.   12

F I G.   13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | DE-C-9 714 97  (SIEMENS-SCHUCKERT)<br>* page 2, line 96 - page 4, line 97; figure *<br>— — — | 1-5.,6,<br>8-13. | H 02 K 9/06<br>H 02 K 9/04<br>H 02 K 5/20 |
| Y | DE-C-9 339 39  (SIEMENS-SCHUCKERT)<br>* page 4, line 33 - page 5, line 8; figures 1-13. *<br>— — — | 6,8,11. | |
| Y | FR-A-1 404 940  (ASSOCIATED ELECTRICAL INDUS-TRIES)<br>* figure 1. *<br>— — — | 9. | |
| Y | US-A-2 690 513  (TAMM)<br>* column 1, lines 34 - 48; figure 1. *<br>— — — | 10. | |
| Y | US-A-3 461 328  (DROUARD)<br>* column 5, line 21 - column 6, line 32; figures 1-16. *<br>— — — | 12,13. | |
| X,Y | FR-A-8 349 64  (BROWN BOVERI)<br>* page 1, line 29 - page 2, line 48; figures 1, 2. *<br>— — — | 1,3-5,8.,<br>9,10. | |
| Y | DE-C-3 723 28  (A.E.G.)<br>* page 1, lines 1 - 40; figures 1, 2. *<br>— — — | 9. | TECHNICAL FIELDS SEARCHED (Int. Cl.5) |
| Y | DE-C-2 871 48  (SIEMENS-SCHUCKERT)<br>* page 1, line 1 - page 2, line 20; figure 1. *<br>— — — | 10. | H 02 K |
| X,Y | DE-B-1 128 914  (SIEMENS-SCHUCKERT)<br>* column 1, line 52 - column 4, line 7; figure *<br>— — — | 1,3,4,7.,5,<br>8. | |
| Y | US-A-1 996 460  (COATES)<br>* page 1, right-hand column, line 1 - page 2, left-hand column, line 39; figures 1-6. *<br>— — — | 5,8. | |
| | –/– | | |

The present search report has been drawn up for all claims

| Place of search | Date of completion of search | Examiner |
|---|---|---|
| The Hague | 15 November 90 | TIO K.H. |

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-1 582 019 (HARRELSON) <br> * page 1, line 51 - page 2, line 114; figures 1-5. * | 1. | |
| A | US-A-3 643 119 (LUKENS) <br> * column 1, line 4 - column 3, line 67; figures 1-4. * | 1. | |

TECHNICAL FIELDS SEARCHED (Int. Cl.5)

The present search report has been drawn up for all claims

| Place of search | Date of completion of search | Examiner |
|---|---|---|
| The Hague | 15 November 90 | TIO K.H. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document